# EUROPÄISCHE PATENTSCHRIFT

(11) **EP 0 241 798 B1**
(45) Veröffentlichungstag und Bekanntmachung des Hinweises auf die Patenterteilung: **20.01.1993**
(21) Anmeldenummer: 87104663.7
(22) Anmeldetag: 30.03.1987
(51) Int. Cl.: H01R 43/042, B25B 7/06, B25B 7/10, B25B 7/12, B25B 7/14, B25B 27/14

(54) **Zange zum Verpressen von Kabelschuhen, Kabelverbindern u. dgl. mit elektrischen Leitern, Lichtwellenleitern usw.**
Pincers for crimping electrical terminals, cable connectors and the like onto electrical leads, light wave guides, etc
Pince pour sertissage des bornes de câbles, des connecteurs de câbles, et semblables avec des connecteurs électriques, des guides d'ondes etc...

(30) Priorität: 09.04.1986 DE 3611861; 18.03.1987 DE 3708727
(43) Veröffentlichungstag der Anmeldung: 21.10.1987
(73) Patentinhaber: Wezag GmbH Werkzeugfabrik, D-35260 Stadtallendorf (DE)
(72) Erfinder: Battenfeld, Kurt, D-3557 Ebsdorfergrund (DE)
(74) Vertreter: Rehberg, Elmar, Dipl.-Ing.

(56) Entgegenhaltungen:
- DE-A- 2 521 378
- DE-U- 6 605 867
- FR-A- 1 298 930

## Beschreibung

Die Erfindung geht aus von einer Zange mit den im Oberbegriff des Anspruchs 1 angegebenen Merkmalen.

Eine derartige Zange ist aus der DE-AS 25 21 378 bekannt. Wichtig ist dabei zu erkennen, daß diese Zange ein großes Übersetzungsverhältnis aufweist. Es findet ein Kniehebeltrieb Verwendung, der aus einem Druckhebel einerseits und einem Teil des beweglichen Zangengriffs gebildet ist, der einen Kniehebelabschnitt bildet. Der Kniehebelabschnitt und der Druckhebel sind über das Kniegelenk miteinander verbunden. Der bewegliche Zangengriff greift an der beweglichen Preßbacke über ein Abstützgelenk an. Dieses Abstützgelenk und das Kniegelenk fluchten etwa mit der Ausbildung des beweglichen Zangengriffs. Der Druckhebel ist mindestens doppelt so lang wie der Kniehebelabschnitt an dem beweglichen Zangengriff. Die zweite Übersetzung wird von der Entfernung des Abstützgelenks an der beweglichen Preßbacke von ihrem Drehgelenk relativ zu der Entfernung des Preßprofils von dem Drehgelenk gebildet. Diese zweite Übersetzung beträgt etwa 1:1. Der Druckhebel des Kniehebeltriebs ist an dem festen Zangengriff über ein Abstützgelenk gelagert, welches zur Veränderung des Preßdrucks in der Schließlage der Preßbacken verändert werden kann. Der Kniehebeltrieb wird nur bis kurz vor der Strecklage benutzt, d. h. das Erreichen der Strecklage wird durch einen Anschlag vermieden, damit die Zange allein infolge Federkraft nach Durchführung eines Preßvorgangs wieder öffnet. Infolge des hohen Übersetzungsverhältnisses kann der Preßvorgang von Hand leicht durchgeführt werden. Damit der Preßvorgang nicht vorzeitig abgebrochen wird, ist eine Zwangssperre vorgesehen. Diese weist zwei Zähne an dem beweglichen Preßbacken und eine federnd gelagerte Klinke an dem festen Zangengriff auf, die zusammenarbeiten. Da diese Zwangssperre somit nahe an dem Gelenk angeordnet ist, um welches die bewegliche Preßbacke relativ zum feststehenden Zangenteil schwenkt, sind die bei einem Schließvorgang sich hier ergebenden Wege bzw. Winkel sehr klein, so daß sowohl die Anordnung der beiden Zähne wie auch die Lagerung und Ausbildung der Klinke mit einer sehr großen Herstellungsgenauigkeit gefertigt und angeordnet werden müssen, wenn durch diese Zwangssperre ein vollständiger Schließvorgang reproduzierbar für mehrere Zangen festgelegt werden soll. Dies ist aber an sich die Aufgabe einer solchen Zwangssperre, nämlich zu verhindern, daß ein Preßvorgang nicht vollständig zu Ende geführt, sondern frühzeitig abgebrochen wird, so daß die Verpressung nicht mit dem gewünschten Preßdruck und dem gewünschten Preßgrad durchgeführt ist. Infolge der kleinen Wege ist es hier auch nur möglich, zwei Zähne an der beweglichen Preßbacke vorzusehen. Diese zwei Zähne kommen mit der federnden Klinke nur gegen Ende des Schließvorgangs überhaupt in Wirkverbindung, so daß nach wie vor die Möglichkeit gegeben ist, daß ein Preßvorgang unfertig zu einem sehr frühen Zeitpunkt abgebrochen werden kann, wenn die Zwangssperre noch nicht eingerastet hat. Immerhin besitzt aber diese bekannte Zwangssperre bereits den Vorteil, daß durch eine Verstellung des Abstützgelenks des Druckhebels an dem festen Zangengriff der Preßdruck in der Schließlage verändert werden kann, ohne gleichzeitig den Eingreif- bzw. Freigabewinkel der Zwangssperre mit zu verstellen.

Aus dem DE-GM 72 05 611 ist eine Zange bekannt, bei der neben der fest angeordneten Preßbacke eine linear bewegliche Preßbacke vorgesehen ist. Es findet ein Kniehebeltrieb Verwendung, der aus einem Kniehebelabschnitt an dem beweglichen Zangengriff und einem Verbindungshebel zu der Preßbacke gebildet ist. Die Längen dieser Teile stehen etwa im Verhältnis 1:1. Es ist ein Anschlag vorgesehen, der sicherstellt, daß die Strecklage des Kniehebeltriebs nicht erreicht wird. Über eine Feder öffnet somit diese Zange nach dem Preßvorgang von selbst. Auch hier ist - obwohl bei grundsätzlich anderem Aufbau - eine Zwangssperre vorgesehen, die aus drei am beweglichen Zangengriff angeordneten Zähnen und einer federnd gelagerten Klinge besteht, die auf dem festen Zangenteil angeordnet ist. Auch hier liegt der Nachteil vor, daß infolge der kleinen Wege, die an der Zwangssperre zurückgelegt werden, eine sehr große Herstellungsgenauigkeit der Zähne und der Klinge erforderlich ist, um den Öffnungspunkt bzw. Öffnungswinkel der Zwangssperre auf einen Kniehebel-Wirkpunkt so festzulegen, daß dieser identische Kniehebel-Wirkpunkt reproduzierbar bei Fertigung der Zange in der Serie festgelegt ist.

Aus der DE-PS 25 55 071 ist eine Zange einer anderen Art bekannt. Diese Zange weist zwar auch eine feste und eine schwenkbar angeordnete Preßbacke auf und besitzt einen festen und einen gelenkig mit der beweglichen Preßbacke verbundenen Zangengriff, der auch einen Kniehebelabschnitt bildet. Der zum Kniehebeltrieb gehörige Druckhebel ist jedoch etwa von gleicher Länge wie der Kniehebelabschnitt und das Abstützgelenk des Druckhebels am festen Zangengriff befindet sich etwa in der Mitte seiner Längserstreckung. Der bewegliche Zangengriff öffnet bei geöffneter Zange sehr weit, so daß die Zange kaum noch mit einer Hand bedient werden kann. Der auf diese Weise aufbringbare Preßdruck ist vergleichsweise gering. Mit dem Druckhebel ist ein ein Zahnsegment tragender Hebel entweder parallel zu diesem oder einstückig mit diesem zwischen dem Abstützgelenk am festen Zangengriff und dem Kniegelenk am beweglichen Zangengriff gelagert. Auf dem beweglichen Zangengriff ist eine federnde Klinke vorgesehen, die zusammen mit dem Zahnsegment eine Zwangssperre bildet. Das Zahnsegment kann vorteilhaft so groß ausgebildet sein, daß es fast über den gesamten Bereich des Schließvorgangs in Wirkung ist. Es ist vorgesehen, das Abstützgelenk des Druckhebels und des Segmenthebels zur Veränderung des Preßdrucks verstellbar zu machen, insbesondere über einen Exzenter. Falls sich dieser Exzenter nur auf den Segmenthebel, nicht aber auf den Druckhebel auswirkt, wird der Kniehebel-Wirkwinkel verstellt, ohne zwangsläufig den Preßdruck mit zu verstellen. Im umgekehrten Fall, wenn der Exzenter nur auf den Druckhebel, nicht aber auf den Segmenthebel verstellend einwirkt, ist es zwar möglich, den Preßdruck zu verstellen ohne den Kniehebel-Wirkwinkel zwangsläufig mit zu verstellen; Voraussetzung hierfür ist jedoch die voneinander getrennte Anordnung zweier Hebel, nämlich des Druckhebels einerseits und des Segmenthebels andererseits. Für den Fall, daß diese beiden Hebel zu einem Stück werden, also das Zahnsegment an dem Druckhebel vorgesehen ist und eine Verstellung an dem Abstützgelenk vorgenommen wird, wobei die wirksame Länge des Druckhebels geändert wird, soll nach den Ausführungen der DE-PS 25 55 071 die Verstellung des Preßdrucks zwangsläufig mit der Verstellung des Kniehebel-Wirkwinkels verbunden sein. Schließlich ist noch die Möglichkeit aufgezeigt, bei Anordnung eines Druckhebels und eines davon separat beweglichen Segmenthebels sowohl das Abstützgelenk am festen Zangenteil wie auch das Kniehebelgelenk gegenläufig verstellbar anzuordnen, um durch die zweite Verstellung eine zwangsläufige Dejustierung des Kniehebel-Wirkwinkels wieder beseitigen zu können. Dies ist aber sehr kompliziert und kaum anwendbar.

Der Erfindung liegt die Aufgabe zugrunde, eine Zange der eingangs beschriebenen Art so weiterzubilden, daß eine einfache Verstellmöglichkeit zur Veränderung des Preßdrucks gegeben ist, ohne daß der Öffnungspunkt bzw. Öffnungswinkel der Zwangssperre mit verstellt wird. Der Schließzustand der Preßbacken soll auch bei unterschiedlichen Preßdrücken immer im gleichen Kniehebelwirkwinkel erreicht werden. Dabei soll die Zwangssperre über einen möglichst großen Weg des Schließvorgangs wirksam sein.

Erfindungsgemäß wird dies dadurch erreicht, daß die Klinke der Zwangssperre auf dem Druckhebel angeordnet ist, und daß die Zwangssperre ein Zahnsegment mit einer Vielzahl von Zähnen aufweist, das auf dem beweglichen Zangengriff ortsfest angeordnet ist. Der Erfindung liegt die Erkenntnis zugrunde, daß der Öffnungspunkt bzw. Öffnungswinkel der Zwangssperre dann, wenn der Kniehebeltrieb lediglich aus dem Druckhebel und dem Kniehebelabschnitt an dem beweglichen Zangengriff besteht und das Zahnsegment mit dem einen der beiden Teile und die federnde Klinke mit dem anderen der beiden Teile fest verbunden ist, konstant ist. Eine Veränderung der Länge des Druckhebels oder des Kniehebelabschnitts, wie es für eine Verstellung des Preßdrucks erforderlich ist, führt somit bei dieser Anordnung nicht zu einer zwangsläufigen Verstellung des Kniehebelwirkwinkels, sondern dieser bleibt konstant. Die Anordnung des Zahnsegments auf dem beweglichen Zangengriff hat bauliche und herstellungstechnische Gründe. Grundsätzlich wäre jedoch auch eine umgekehrte Anordnung der Teile der Zwangshebelsperre möglich. Die Zwangssperre ist an der angegebenen Stelle an einem Bereich der Zange vorgesehen, wo sie einerseits leicht unterbringbar ist und andererseits infolge der Übersetzung größere Wege zurückgelegt werden als im Bereich der Preßbacken. Insoweit genügt eine normale Herstellungsgenauigkeit, um den Kniehebelwirkwinkel bei der Serienherstellung der Zangen reproduzierbar einhalten zu können. Um die Konstanz im Kniehebelwirkwinkel zu erreichen, ist es im Vergleich zum Stand der Technik nicht mehr erforderlich, neben dem Druckhebel einen gesonderten Segmenthebel vorzusehen oder eine zweifache Verstellmöglichkeit anzuordnen, um eine zwangsweise Dejustierung wieder rückgängig zu machen. Auch der Druckhebel ist in einfacher Weise herzustellen und benötigt keine Abkröpfung, wie es für die Anordnung eines Zahnsegments erforderlich wäre. Die Teile der Zwangssperre müssen fest mit dem Druckhebel bzw. mit dem beweglichen Zangengriff verbunden sein, wobei freilich die Klinke schwenkbar gelagert sein muß. Eine axiale Verschiebung zueinander darf jedoch nicht vorliegen. Durch die Anordnung des Zahnsegments am beweglichen Zangenteil ist auch die Möglichkeit geschaffen, das Zahnsegment genügend groß gestalten zu können, so daß nahezu der gesamte Schließverlauf von der Wirkung der Zwangssperre überstrichen wird. Fehlbedienungen, wie sie bei der Verwendung von nur ein oder zwei Zähnen stattfinden können, werden damit vermieden. Der Preßdruck läßt sich verläßlich einstellen, ohne am Kniehebelwirkwinkel etwas zu ändern. Auch Verschleiß in der Zange kann auf diese Art und Weise nachgestellt werden. Durch die erfindungsgemäße Anordnung wird schließlich auch die Möglichkeit geschaffen, die Feder zum Öffnen der Zange an geschickter Stelle unterzubringen, weil die Zwangssperre die Unterbringung der Feder nicht stört. Schließlich läßt sich die neue Zange einfach und sicher auch bei der Preßdruckverstellung handhaben, was für die tägliche Anwendung von besonderem Vorteil ist.

Wenn das Zahnsegment einstückig mit dem beweglichen Zangengriff ausgebildet ist, ergibt sich die Möglichkeit einer besonders einfachen Herstellung des Zahnsegments. Dieses kann gleichsam als Verlängerung der einen Seite eines im Querschnitt U-förmigen Zangengriffs ausgebildet sein und befindet sich damit gleichsam zwangsläufig in einer Ebene parallel zum Druckhebel, so daß es ohne Weiteres mit der dort auf dem Druckhebel angeordneten Klinke zusammenarbeiten kann, ohne daß eine Abkröpfung des Zahnsegments relativ zu dem beweglichen Zangengriff erforderlich ist.

Zur Veränderung des Preßdrucks kann mindestens ein Abstützgelenk einen verstellbaren Exzenter aufweisen oder eine verstellbare Schraube besitzen. Es ist natürlich auch möglich, die Verstellung in beide Abstützpunkte hinein zu legen. Lediglich das Kniehebelgelenk muß von Verstellmöglichkeiten freigehalten werden, weil hier eine Veränderung wiederum zu einer Veränderung des Kniehebelwirkwinkels führen würde.

Die die Schließbewegung begrenzenden Anschläge können zweckmäßig einstellbar ausgebildet sein, um Herstellungsungenauigkeiten auszugleichen. Da der Kniehebelwirkwinkel konstant bleibt, entfällt auch eine Verstellung der Anschläge bei einer Preßdruckverstellung. Die Anschläge können eine den Druckhebel durchsetzende Einstellschraube aufweisen, deren vorderes Ende mit dem beweglichen Zangengriff zusammenarbeitet. Auch dies ist eine geschickte Unterbringung.

Eine bevorzugte Ausführungsform der Erfindung ist in den Zeichnungen dargestellt und wird im Folgenden erläutert. Es zeigen:
- Figur 1: eine Draufsicht auf die Zange in geschlossenem Zustand, kurz vor Erreichen der Endstellung,
- Figur 2: eine Draufsicht auf die Zange gemäß Figur 1, jedoch in geöffnetem Zustand,
- Figur 3: eine Draufsicht auf die Zange in der Endstellung eines Preßvorgangs und
- Figur 4: eine schematische Darstellung zur Verdeutlichung des Kniehebelwirkwinkels.

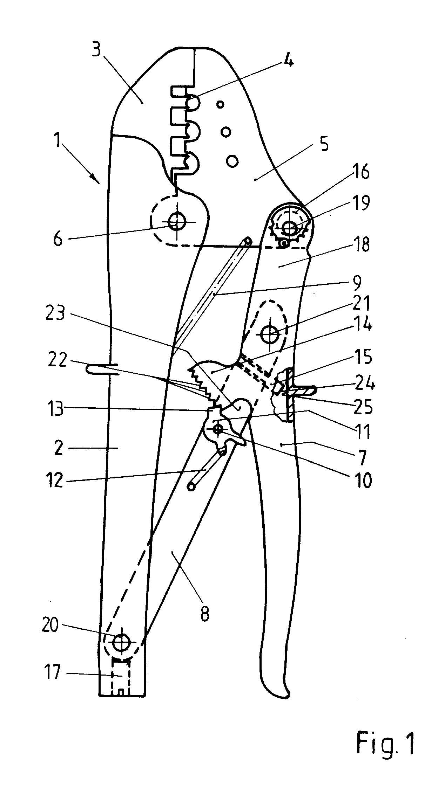

Eine in Figur 1 dargestellte Zange 1 ist von an sich bekannter Bauart. Am vorderen Ende eines festen Zangengriffs 2 ist eine Preßbacke 3 fest mit dem Zangengriff 2 verbunden vorgesehen, welche mit einem Preßprofil 4 ausgestattet ist. Am festen Zangengriff 2 ist ebenfalls am vorderen Ende eine bewegliche Preßbacke 5 schwenkbar gelagert, welche ebenfalls mit einem das Preßprofil 4 ergänzenden Preßprofil versehen ist. Zur Lagerung dient dabei ein Bolzen 6.

Zwischen dem festen Zangengriff 2 und der Preßbacke 5 ist ein Kniehebeltrieb angeordnet, der einerseits aus einem Teil eines beweglichen Zangengriffs 7, nämlich einem Kniehebelabschnitt 18, und einem Druckhebel 8 gebildet ist. Der bewegliche Zangengriff 7 ist dabei an der beweglichen Preßbacke 5 über ein Abstützgelenk 19 angelenkt und der Druckhebel 8 stützt sich im hinteren Ende des Zangengriffs 2 über ein Abstützgelenk 20 ab. Zum Kniehebeltrieb gehört schließlich noch ein Kniegelenk 21, durch welches der Kniehebelabschnitt 18 mit dem Druckhebel 8 gelenkig verbunden ist. Es ist ersichtlich, daß die Länge des Druckhebels 8 sehr viel größer ist als die Länge des Kniehebelabschnitts 18, also die Entfernung des Abstützgelenks 19 von dem Kniegelenk 21. Dieses Größenverhältnis liegt mindestens in der Größenordnung 2:1, vorzugsweise noch höher. Der Kniehebeltrieb wird jedoch nur außerhalb seiner Strecklage, also unter Vermeidung einer Lage, bei der das Kniegelenk 21 auf der Verbindungslinie der Abstützpunkte 19 und 20 zu liegen kommt, benutzt. Erst recht wird eine Totpunktsüberschreitung vermieden. Die Benutzung des Kniehebeltriebs nur bis kurz vor die Strecklage hat seinen Sinn darin, daß zwischen dem Zangengriff 2 und der Preßbacke 5 eine Feder 9 angeordnet ist, die somit in der Lage ist, nach Erreichen der Endlage einer Schließbewegung und damit des Kniehebelwirkwinkels die Zange wieder selbsttätig zu öffnen.

Das Abstützgelenk 19 des Kniehebelabschnitts 18 und gleichzeitig des beweglichen Zangengriffs 7 an der Preßbacke 5 kann einen Exzenterbolzen 16 aufweisen, um die wirksame Entfernung der beiden Abstützgelenke 19 und 20 zueinander zu verändern und damit den Preßdruck bzw. die Preßkraft der Preßbacken 3 und 5 zueinander in der Schließlage einzustellen oder um durch Verschleiß entstandenes Spiel auszugleichen. In ähnlicher Weise, also auch mit einem Exzenter, kann auch oder nur allein das Abstützgelenk 20 verstellbar sein. Es ist aber auch möglich, im Bereich des Abstützgelenks 20 eine Einstellschraube 17 im festen Zangengriff 2 zu lagern, mit deren Hilfe das Abstützgelenk 20 im festen Zangengriff 2 axial verschoben wird. Beide aufgezeigten Verstellmöglichkeiten, die einzeln oder kombiniert angewendet werden können, dienen allein zur Verstellung des Preßdrucks bzw. der Preßkraft in der Endstellung der Schließbewegung.

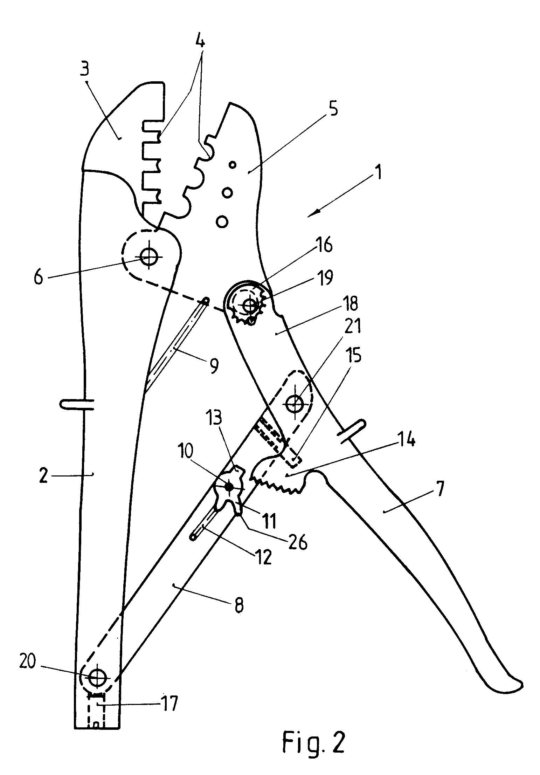

Durch die aufgezeigten Übersetzungs- bzw. Längenverhältnisse der verschiedenen Hebelarme zueinander besitzt die Zange eine große Übersetzung, d. h. mit einer vergleichsweise kleinen Handkraft zwischen dem festen Zangengriff 2 und dem beweglichen Zangengriff 7 ist es möglich, eine erheblich verstärkte Preßkraft im Bereich des Preßprofils 4 auszuüben. Zum verläßlichen Erreichen dieser gewünschten bzw. für ein ordnungsgemäßes Verpressen der Kabelschuhe mit den elektrischen Leitern erforderliche Preßkraft ist eine Zwangssperre vorgesehen, die aus zwei miteinander in Eingriff kommenden Teilen besteht, die im Bereich des Kniegelenks 21 dem Druckhebel 8 zugeordnet angeordnet sind. So weist die Zwangssperre eine auf einem Lagerzapfen 10 drehbar gelagerte Klinke 11 auf. Eine Rückführfeder 12 beaufschlagt die Verschwenkbarkeit der Klinke 11 in eine Mittelstellung hinein. Die Klinke 11 besitzt einen Rastfortsatz 13, der mit einem Zahnsegment 14 zusammenarbeitet, welches fest am beweglichen Zangengriff 7 angeordnet ist bzw. aus dem Material dieses beweglichen Zangengriffs 7 herausgearbeitet ist. Das Zahnsegment 14 weist eine Vielzahl von Zähnen 22 auf, die alle auf einem Kreisbogen um das Kniegelenk 21 angeordnet sind. Durch die bogenförmige Länge des Zahnsegments 14 wird der Wirkungsbereich der Zwangssperre festgelegt. Zweckmäßig wird diese bogenförmige Länge so gewählt, daß die Zwangssperre über den wesentlichen Weg des Schließvorgangs in Eingriff ist und nur in der Anfangs- und in der Endstellung der Rastfortsatz 13 außer Eingriff zu den Zähnen 22 kommt. Hierfür ist bezüglich der Endstellung ein Freiraum 23 am beweglichen Zangengriff 7 im Anschluß an das Zahnsegment 14 angeordnet, während auf der anderen Seite - der Anfangsstellung einer Schließbewegung zugeordnet -das Zahnsegment 14 endet, so daß hier auch gleichsam ein Freiraum vorgesehen ist, wie dies insbesondere Figur 2 zeigt.

Im Bereich des Kniegelenks 21 ist ferner eine Einstellschraube 15 gelagert, die den Druckhebel 8 durchsetzt und in einem entsprechenden Gewinde so relativ zum Druckhebel 8 verstellt werden kann, daß ihr aus dem Druckhebel 8 herausreichendes Ende mehr oder weniger weit vorsteht und damit mit dem Rücken des beweglichen Zangengriffs 7, der einen U-förmigen Querschnitt aufweisen kann, zusammenarbeitet. Es werden hier Anschläge 24 und 25 gebildet, wie dies insbesondere aus Figur 1 ersichtlich ist. Diese Anschläge 24 und 25 verhindern die Einnahme einer Streck- oder Totpunktslage des Kniehebeltriebs und begrenzen somit die Verschwenkbarkeit. Es wird der Kniehebelwirkwinkel damit festgelegt. Dies erfolgt in Abstimmung auf die Zwangssperre, d. h. die Anschläge 24 und 25 kommen dann zur Anlage, wenn gerade während eines Schließvorgangs der Rastfortsatz 13 von dem letzten Zahn 22 des Zahnsegments 14 freigekommen ist und in den Freiraum 23 einschwenkt.

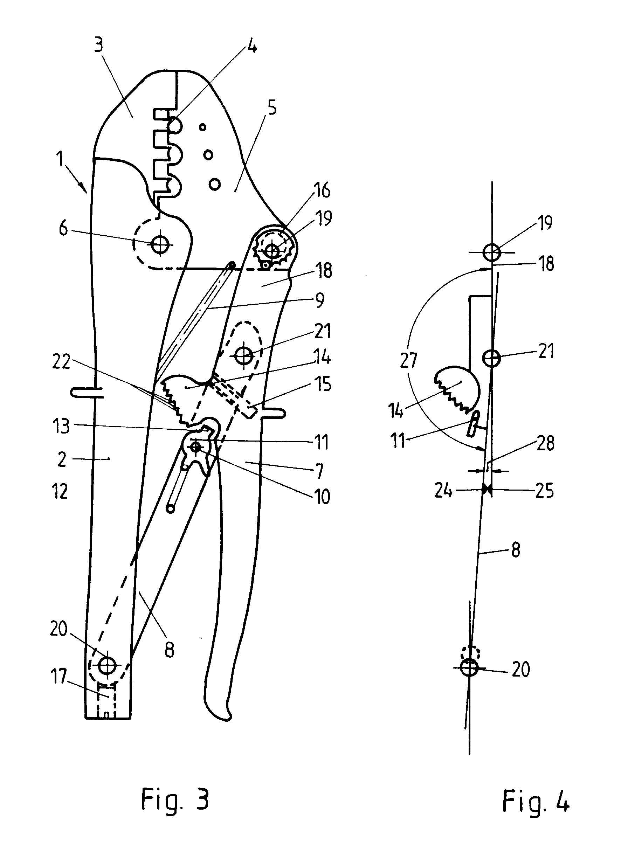

Die Arbeitsweise der Zange 1 mit der Zwangssperre ist folgende:
Ausgehend von der Öffnungslage gemäß Figur 2, in welcher die Zwangssperre anfänglich frei ist, werden die zu verpressenden Teile in das Preßprofil 4 eingelegt und der bewegliche Zangengriff 7 wird unter Annäherung auf den festen Zangengriff 2 verschwenkt, so daß der Kniehebeltrieb seine Funktion beginnt und die bewegliche Preßbacke 5 um den Bolzen 6 in Richtung auf die Schließstellung verschwenkt wird. Dabei kommt der Rastfortsatz 13 der Klinke 11 in Wirkverbindung zu den Zähnen 22 des Zahnsegments 14. Sobald der erste Zahn überschritten ist, kann die Schließbewegung in ihrer Richtung nicht mehr verlassen bzw. aufgehoben werden, es sei denn, es läge eine offensichtliche Fehleinlegung der zu verpressenden Teile vor. Zu diesem Zweck ist es möglich, manuell gezielt durch Betätigung eines Auslösers 26 an der Klinke 11 den Rastfortsatz 13 aus einer Lücke zwischen zwei Zähnen 22 auszuheben, so daß die Zwangssperre wirkungslos wird. In der Regel, also bei ordnungsgemäß eingelegten zu verpressenden Teilen wird der Auslöser 26 natürlich nicht betätigt, sondern der Schließvorgang setzt sich fort bis in die Stellung gemäß Figur 1, in welcher die Zwangssperre noch geschlossen ist, jedoch die Preßbacken 3 und 4 bereits nahezu aufeinanderliegen. Um die Endlage eines Verpressungsvorgang gemäß Figur 3 zu erreichen, ist es nun erforderlich, den beweglichen Zangengriff 7 weiter zu drücken und eine noch weitergehendere Annäherung zu dem festen Zangengriff 2 zu erreichen. Dabei wird der erforderliche Endpreßdruck am Preßprofil 4 erreicht und der Rastfortsatz 13 kommt von den Zähnen 22 des Zahnsegments 14 frei und schwenkt in den Freiraum 23 ein. Dabei gelangen die Anschläge 24 und 25 in Anlage aneinander, so daß der insoweit reproduzierbar eingestellte Kniehebelwirkwinkel nicht mehr vergrößert werden kann. Die Verpressung der Teile ist ordnungsgemäß erfolgt und durch Loslassen bzw. Nachgeben an dem beweglichen Zangengriff 7 ist die Feder 9 in der Lage, die Zange selbsttätig zu öffnen, weil eine Totpunktslage vermieden worden ist.

Durch eine Verstellung der Entfernung beider Abstützgelenke 19 und 20 zueinander, also entweder durch Verstellung des Abstützgelenks 19 und/oder des Abstützgelenks 20 kann der in der Endstellung wirksame Preßdruck eingestellt werden, ohne daß dabei der Winkel der Zwangssperre verstellt wird, in welchem diese wirksam wird. Die Verstellung des Preßdrucks ist also unabhängig von der Wirkung der Zwangssperre. Der Winkel, an welcher die Zwangssperre wieder öffnet, bleibt konstant. Um dies zu verdeutlichen, wird auf Figur 4 hingewiesen. Dort sind in schematischer Anordnung das Abstützgelenk 19, das Abstützgelenk 20 und das Kniegelenk 21 dargestellt, wobei ersichtlich ist, daß das Kniegelenk 21 nicht auf einer Verbindungslinie zwischen den Abstützgelenken 19 und 20 liegt, sondern rechts davon. Der Druckhebel 8 und der Kniehebelabschnitt 18 sind durch Striche symbolisiert, so daß zwischen diesen Hebeln 8, 18 der Kniehebelwirkwinkel 27 aufgespannt wird, der, wie ersichtlich, etwas kleiner als 180° ist. Symbolhaft ist das Zahnsegment 14 und die Klinke 11 angedeutet. Das Zahnsegment 14 ist mit dem Kniehebelsabschnitt 18 fest verbunden, während die Klinke 11 auf dem Druckhebel schwenkbar, aber ortsfest gelagert ist. Es ist die Stellung dargestellt, in welcher die Klinke 11 gerade von dem Zahnsegment 14 im Verlauf eines Schließvorgangs freigekommen ist. Hierdurch ist der Kniehebelwirkwinkel 27 festgelegt, der im übrigen durch die Anschläge 24 und 25 gesichert ist, die einen Anschlagswinkel 28 festlegen. Die Summe aus Kniehebelwirkwinkel 27 und Anschlagswinkel 28 beträgt 180°. Man erkennt nun, daß es für die Relativlage der Teile der Zwangssperre, nämlich des Zahnsegments 14 und der Klinke 11 bezüglich des Erreichens der Freigabe nur auf den Kniehebelwirkwinkel 27 ankommt, dagegen nicht auf die Länge des Druckhebels 8 und/oder des Kniehebelabschnitts 18. Eine Verstellung des Abstützgelenks 20, wie dies in Figur 4 in gepunkteter Weise angedeutet ist, also eine Verstellung der wirksamen Länge des Druckhebels 8, führt somit nicht zu einer Veränderung der Eingriffsverhältnisse der Zwangssperre, so daß der Kniehebelwirkwinkel 27 bei einer solchen Preßdruckverstellung konstant bleibt. Gleiches gilt für eine Verstellung des Abstützgelenks 19 oder für eine gleichzeitige Verstellung beider Abstützgelenke 19 und 20.

## Patentansprüche

1. Zange zum Verpressen von Kabelschuhen, Kabelverbindern o. dgl., mit elektrischen Leitern, Lichtwellenleitern usw., mit zwei relativ gegeneinander bewegbaren Zangengriffen und zwei zusammen ein Preßprofil bildenden Preßbacken, von denen die eine Preßbacke starr mit einem festen Zangengriff verbunden ist und mit diesem einen festen Zangenteil bildet, während die andere Preßbacke am festen Zangenteil schwenkbar angelenkt ist, mit dem über ein Abstützgelenk an der schwenkbaren Preßbacke befestigten zweiten Zangengriff und einem die beiden Zangengriffe über ein weiteres Abstützgelenk und ein Kniegelenk verbindenden Druckhebel, der zu einem beweglichen Zangenteil gehört, mit einem Kniehebeltrieb aus dem Druckhebel und einem Kniehebelabschnitt des bewegbaren Zangengriffs mindestens in einem Übersetzungsverhältnis der Länge des Druckhebels zu der Länge des Kniehebelabschnitts von etwa 2:1, mit die Schließbewegung zwischen beweglichem und festem Zangenteil kurz vor Erreichen der Strecklage des Kniehebeltriebs begrenzenden Anschlägen, so daß die Zange aus der Schließlage der Preßbacken mit Federkraft allein wieder öffnet, wobei die Verbindungsgerade zwischen dem Abstützgelenk und dem Kniegelenk an dem beweglichen Zangengriff mit der Längsachse des beweglichen Zangengriffs ungefähr zusammenfällt und mindestens ein Abstützgelenk zur Veränderung des Preßdrucks verstellbar ausgebildet ist, und mit einer eine federnd beweglich, aber ortsfest gelagerte Klinke aufweisenden Zwangssperre zum Verhindern des Öffnens der Zange ohne vorheriges Erreichen der Schließlage der Preßbacken, dadurch gekennzeichnet, daß die Klinke (11) der Zwangssperre auf dem Druckhebel (8) angeordnet ist, und daß die Zwangssperre ein Zahnsegment (14) mit einer Vielzahl von Zähnen (22) aufweist, das auf dem beweglichen Zangengriff (7) ortsfest angeordnet ist, und das mit der Klinke Zusammenarbeitet.

2. Zange nach Anspruch 1, dadurch gekennzeichnet, daß das Zahnsegment (14) einstückig mit dem beweglichen Zangengriff (7) ausgebildet ist.

3. Zange nach Anspruch 1, dadurch gekennzeichnet, daß zur Veränderung des Preßdrucks mindestens ein Abstützgelenk (19, 20) einen verstellbaren Exzenter aufweist.

4. Zange nach Anspruch 1, dadurch gekennzeichnet, daß zur Veränderung des Preßdrucks mindestens ein Abstützgelenk (19, 20) eine verstellbare Schraube (17) aufweist.

5. Zange nach Anspruch 1, dadurch gekennzeichnet, daß die die Schließbewegung begrenzenden Anschläge (24, 25) einstellbar ausgebildet sind.

6. Zange nach Anspruch 5, dadurch gekennzeichnet, daß die Anschläge (24, 25) eine den Druckhebel (9) durchsetzende Einstellschraube (15) aufweisen, deren vorstehendes Ende mit dem beweglichen Zangengriff (7) zusammenarbeitet.

## Claims

1. Pliers, for the crimping of cable lugs, cable connectors or the like with electrical conductors, optical conductors and so forth, with two pliers handles which are movable one relative to the other and two press cheeks which together form a press profile and of which the one press cheek is rigidly connected with a fixed pliers handle and with this forms a fixed pliers part, whilst the other press cheek is hinged to be pivotable at the fixed pliers part, with the second pliers handle fastened by way of a supporting joint at the pivotable press cheek and a pressure lever which belongs to a movable pliers part and connects both the pliers handles by way of a further supporting joint and a toggle joint, with a toggle lever drive of the pressure lever and a toggle lever portion of the movable pliers handle in at least a transmission ratio of the length of the pressure lever to the length of the toggle lever portion of about 2:1, with abutments limiting the closing movement between the movable pliers part and the fixed pliers part shortly before reaching the straight position of the toggle lever drive so that the pliers again open out of the closed position of the press cheeks solely by spring force, wherein the connecting straight line between the supporting joint and the toggle joint at the movable pliers handle co-incides approximately with the longitudinal axis of the movable pliers handle and at least one supporting joint is constructed to be adjustable for variation of the pressing pressure, and with a constrained barrier, which comprises a resiliently movable, but fixedly borne pawl, for preventing the opening of the pliers without the closed position of the press cheeks having been reached previously, characterised thereby, that the pawl (11) of the constrained barrier is arranged on the pressure lever (8) and that the constrained barrier comprises a toothed segment (14) with a plurality of teeth (22), which is arranged in fixed location on the movable pliers handle (7) and co-operates with the pawl.

2. Pliers according to claim 1, characterised thereby, that the toothed segment (14) is constructed integrally with the movable pliers handle (7).

3. Pliers according to claim 1, characterised thereby, that at least one supporting joint (19, 20) comprises an adjustable eccentric for variation of the pressing pressure.

4. Pliers according to claim 1, characterised thereby, that at least one supporting joint (19, 20) comprises an adjustable screw (17) for variation of the pressing pressure.

5. Pliers according to claim 1, characterised thereby, that the abutments (24, 25) limiting the closing movement are constructed to be adjustable.

6. Pliers according to claim 5, characterised thereby, that the abutments (24, 25) comprise an adjusting screw (15), which passes through the pressure lever (8) and the projecting end of which cooperates with the movable pliers handle (7).

## Revendications

1. Pince à sertir des cosses de câbles, des connecteurs de câbles ou objets similaires sur des conducteurs électriques, des guides d'ondes, etc. avec deux poignées de pince mobiles l'une par rapport à l'autre et deux mâchoires de serrage formant ensemble un profil de serrage, une de ces mâchoires étant reliée rigidement à une poignée fixe de la pince et formant avec celle-ci une partie fixe de la pince, tandis que l'autre mâchoire de serrage est montée pivotante sur la partie fixe de la pince, avec la deuxième poignée de la pince reliée par une articulation d'appui à la mâchoire de serrage pivotante et avec un levier de pression reliant les deux poignées de la pince par une autre articulation d'appui et par une articulation à genouillère, lequel levier appartient à une partie mobile de la pince, avec un mécanisme à genouillère se composant du levier de pression et d'une section du levier de genouillère de la poignée mobile de la pince, au moins dans un rapport de démultiplication de la longueur du levier de pression par rapport à la longueur de la sectiondu levier de genouillère d'environ 2 : 1, avec des butées limitant le mouvement de fermeture entre la partie mobile et la partie fixe de la pince, peu avant que soit atteinte la position d'extension du mécanisme à genouillère, de telle sorte que la pince s'ouvre à nouveau toute seule par la force d'un ressort, à partir de la position de fermeture des mâchoires de serrage, tandis que la ligne droite reliant l'articulation d'appui à l'articulation à genouillère sur la poignée mobile de la pince coïncide à peu près avec l'axe longitudinal de la poignée mobile de la pince et qu'au moins une articulation d'appui est réglable pour modifier la pression de serrage, et avec un dispositif de blocage obligatoire présentant un cliquet mobile contre un ressort, mais monté sur un pivot fixe, pour empêcher l'ouverture de la pince sans que soit préalablement obtenue la position de fermeture des mâchoires de serrage,
**caractérisée** en ce que le cliquet (11) du dispositif de blocage est disposé sur le levier de pression (8) et en ce que le dispositif de blocage présente un segment denté (14) avec une multiplicité de dents (22) qui est disposé à poste fixe sur la poignée mobile (7) de la pince et qui coopère avec le cliquet.

2. Pince selon la revendication 1, caractérisée en ce que le segment denté (14) est d'une seule pièce avec la poignée mobile (7) de la pince.

3. Pince selon la revendication 1, caractérisée en ce que, pour modifier la pression de serrage, au moins une articulation d'appui (19, 20) présente un excentrique réglable.

4. Pince selon la revendication 1, caractérisée en ce que, pour modifier la pression de serrage, au moins une articulation d'appui (19, 20) présente une vis réglable (17).

5. Pince selon la revendication 1, caractérisée en ce que les butées (24, 25) limitant le mouvement de fermeture sont réglables.

6. Pince selon la revendication 5, caractérisée en ce que les butées (24, 25) présentent une vis réglable (15) traversant le levier de pression (8), dont l'extrémité dépassante coopère avec la poignée mobile (7) de la pince.
